(19) Europäisches Patentamt
European Patent Office
Office européen des brevets

(11) **EP 3 187 930 A1**

(12) **EUROPEAN PATENT APPLICATION**

(43) Date of publication:
**05.07.2017 Bulletin 2017/27**

(51) Int Cl.:
**G02F 1/313** (2006.01)  **H04J 14/02** (2006.01)

(21) Application number: **16198357.2**

(22) Date of filing: **11.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **12.11.2015 US 201514939086**

(71) Applicant: **Ranovus Inc.**
**Ottawa, Ontario K2H 8R6 (CA)**

(72) Inventors:
• **CAO, Bin**
**Kanata, Ontario K2M 2X9 (CA)**

• **BECKETT, Douglas J.S.**
**Kanata, Ontario K2L 1Z3 (CA)**
• **LOGAN, Dylan**
**Ottawa, Ontario K1H 7R1 (CA)**
• **HAUENSCHILD, Juergen**
**44789 Bochum (DE)**

(74) Representative: **Zimmermann, Tankred Klaus et al**
**Schoppe, Zimmermann, Stöckeler**
**Zinkler, Schenk & Partner mbB**
**Patentanwälte**
**Radlkoferstrasse 2**
**81373 München (DE)**

(54) **APPARATUS AND METHOD OF RESONANCE WAVELENGTH ALIGNMENT FOR RING MODULATORS**

(57)     An apparatus, system and method of resonance wavelength alignment for ring modulators is provided which includes: an optical input bus configured to convey a given optical input signal having a given optical frequency; an optical ring modulator configured to: receive and modulate the input signal from the input bus; an optical output bus configured to convey a modulated optical signal from the ring; a first optical tap on the input bus configured to sample the input signal; a second optical tap configured to sample the modulated signal; a controller in communication with the ring, the first tap and the second tap, the controller configured to: determine a current insertion loss of the ring from respective signals received from both the first tap and the second tap; and, control the ring in a feedback loop with the current insertion loss until the current insertion loss comprises a given insertion loss.

Fig. 1

Printed by Jouve, 75001 PARIS (FR)

## Description

## FIELD

The specification relates generally to telecommunication devices, and specifically to an apparatus system and method of resonance wavelength alignment for ring modulators.

## BACKGROUND

Ring resonators are used in optical telecommunications devices as the external modulator. Locking and/or stabilizing the resonance frequency of a ring on a given frequency using feedback loops have been based solely on output power monitoring. However, any variation of an input power due, for example, to aging, coupling, etc., can cause the locking point to drift. Furthermore, such methods are lacking a capability of adjusting an operating point to a best locking condition for system performance. While some methods use detection of an inserted dithering tone in a feedback loop, these techniques are complex and may require use of a local oscillator.

## SUMMARY

The present specification provides devices which monitor insertion loss of an optical ring modulator being used to modulate an optical signal of a given frequency. The insertion loss is measured using two optical taps, one which measures strength of an optical input signal to the optical ring modulator and a second which measures strength of a modulated optical signal. The second optical tap can be on the optical ring modulator and/or after the optical ring modulator (e.g. on a drop port and/or through port). A controller receives signals from both optical taps, determines a current insertion loss of the optical ring modulator, and controls the optical ring modulator to a given insertion loss in a feedback loop with the optical taps, for example by controlling a heater at the optical ring modulator. In some implementations, an optical input bus can carry a plurality of optical signals at different frequencies, and the optical ring modulator is tuned to filter and modulate a single one of the optical signals, in a single-bus-multiple-ring configuration. Hence, the first optical tap can comprise a photodiode and a tunable optical ring filter controlled by the controller to resonate through a range of frequencies, for example by controlling a heater; as the tunable optical ring filter is tuned to a given frequency of the optical ring modulator that is modulating the given frequency, the signal at the photodiode is used in the insertion loss measurement. In yet further implementations, the optical ring modulator and/or an optical ring filter is tuned to control a strength of one or more of: the optical signals; and the modulated optical signals (e.g. the modulated optical signals formed from the optical signals input to the optical ring modulator)

in a feedback loop with output from the one or more optical taps.

In this specification, elements may be described as "configured to" perform one or more functions or "configured for" such functions. In general, an element that is configured to perform or configured for performing a function is enabled to perform the function, or is suitable for performing the function, or is adapted to perform the function, or is operable to perform the function, or is otherwise capable of performing the function.

Furthermore, as will become apparent, in this specification certain elements may be described as connected physically, electronically, or any combination thereof, according to context. In general, components that are electrically connected are configured to communicate (that is, they are capable of communicating) by way of electric signals. According to context, two components that are physically coupled and/or physically connected may behave as a single element. In some cases, physically connected elements may be integrally formed, e.g., part of a single-piece article that may share structures and materials. In other cases, physically connected elements may comprise discrete components that may be fastened together in any fashion. Physical connections may also include a combination of discrete components fastened together, and components fashioned as a single piece.

It is understood that for the purpose of this specification, language of "at least one of X, Y, and Z" and "one or more of X, Y and Z" can be construed as X only, Y only, Z only, or any combination of two or more items X, Y, and Z (e.g., XYZ, XY, YZ, XZ, and the like). Similar logic can be applied for two or more items in any occurrence of "at least one ..." and "one or more..." language.

An aspect of the specification provides a device comprising: an optical input bus configured to convey a given optical input signal having a given optical frequency; an optical ring modulator configured to: receive the given optical input signal from the optical input bus; and modulate the given optical input signal; an optical output bus configured to convey a modulated optical signal from the optical ring modulator; a first optical tap on the optical input bus configured to sample the given optical input signal input to the optical ring modulator; a second optical tap configured to sample the modulated optical signal; and, a controller in communication with the optical ring modulator, the first optical tap and the second optical tap, the controller configured to: determine a current insertion loss of the optical ring modulator from respective signals received from both the first optical tap and the second optical tap; and, control the optical ring modulator in a feedback loop with the current insertion loss until the current insertion loss comprises a given insertion loss.

The optical ring modulator can comprise a heater, and the controller can be configured to control the heater when controlling the optical ring modulator in the feedback loop.

The second optical tap can be in communication with the optical ring modulator such that the modulated optical signal is sampled at the optical ring modulator, and the controller can be configured to determine the insertion loss by determining a reciprocal insertion loss by: dividing a sampled signal from the first optical tap by a respective sampled signal from the second optical tap.

The second optical tap can be in communication with the optical output bus such that the modulated optical signal is sampled at the optical output bus, and the controller can be configured to determine the insertion loss by dividing a sampled signal from the second optical tap by a respective sampled signal from the first optical tap.

The device can further comprise an optical ring filter located on the optical input bus, the optical ring filter configured to selectively convey the given optical input signal having the given optical frequency to the optical ring modulator, while preventing other optical input signals from reaching the optical ring modulator and the first optical tap. The controller can be further configured to tune the optical ring filter to control a strength of one or more of the given optical input signal and the modulated optical signal in a feedback loop with output from one or more of the first optical tap and the second optical tap. The optical ring filter, the optical ring modulator, optical input bus, the optical output bus, the first optical tap and the second optical tap can form an alignment apparatus configured to maintain the given insertion loss for the given optical frequency using the feedback loop, the device further comprising a plurality of alignment apparatuses, including the alignment apparatus, arranged in series on the optical input bus, each of the plurality of alignment apparatuses configured to maintain a respective given insertion loss for a respective given optical frequency using respective feedback loops, a respective ring filter for each of the plurality of alignment apparatuses configured to convey a respective given optical input signal to a respective optical ring modulator, while preventing the other optical input signals on the optical input bus from reaching a respective optical ring modulator and a respective first optical tap. The device can further comprise an optical multiplexer configured to receive and combine respective modulated optical signals from each of the plurality of alignment apparatuses.

The first optical tap can comprise: a photodiode; and a tunable optical ring filter located between the optical input bus and the photodiode, the tunable optical ring filter configured to: sequentially tune a present filter frequency through a range of frequencies to sequentially produce signals at the photodiode indicative of a strength of optical signals on the optical input bus corresponding to the present filter frequency. The controller can be further in communication with the photodiode and the tunable optical ring filter, the controller further configured to: control the tunable optical ring filter to sequentially tune the present filter frequency through the range of frequencies; and receive the signals from the photodiode, a signal corresponding to the given optical frequency used to determine the current insertion loss of the optical ring modulator. The optical ring filter, the optical ring modulator, the optical output bus, the first optical tap and the second optical tap can form an alignment apparatus configured to maintain the given insertion loss for the given optical frequency using the feedback loop, the device further comprising a plurality of alignment apparatuses, including the alignment apparatus, arranged in series on the optical input bus, each of the plurality of alignment apparatuses configured to maintain a respective given insertion loss for a respective given optical frequency using respective feedback loops, respective optical ring modulators for each of the each of the plurality of alignment apparatuses arranged in series on the optical input bus, the plurality of alignment apparatuses having the first optical tap in common such that a respective current insertion loss is determined from a respective signal corresponding to a given respective optical frequency received as the tunable optical ring filter scans through the range of frequencies.

The second optical tap can comprise: a photodiode; and a tunable optical ring filter located between the optical output bus and the photodiode, the tunable optical ring filter configured to: sequentially tune a present filter frequency through a range of frequencies to sequentially produce signals at the photodiode indicative of a strength of modulated optical signals on the optical input bus corresponding to the present filter frequency.

The optical ring modulator can comprise a voltage control device and the controller is further configured to control the voltage control device to modulate the given optical input signal.

Another aspect of the specification can provide a method comprising: at a device comprising: an optical input bus configured to convey a given optical input signal having a given optical frequency; an optical ring modulator configured to: receive the given optical input signal from the optical input bus; and modulate the given optical input signal; an optical output bus configured to convey a modulated optical signal from the optical ring modulator; a first optical tap on the optical input bus configured to sample the given optical input signal input to the optical ring modulator; a second optical tap configured to sample the modulated optical signal; and a controller in communication with the optical ring modulator, the first optical tap and the second optical tap, determining, at the controller, a current insertion loss of the optical ring modulator from respective signals received from both the first optical tap and the second optical tap; and, controlling, at the controller, the optical ring modulator in a feedback loop with the current insertion loss until the current insertion loss comprises a given insertion loss.

The optical ring modulator can comprise a heater, and the method can further comprise controlling, at the controller, the heater when controlling the optical ring modulator in the feedback loop.

The second optical tap can be in communication with the optical ring modulator such that the modulated optical signal is sampled at the optical ring modulator, and the method can further comprise determining the insertion loss by determining, a the controller, a reciprocal insertion loss by: dividing a sampled signal from the first optical tap by a respective sampled signal from the second optical tap.

The second optical tap can be in communication with the optical output bus such that the modulated optical signal is sampled at the optical output bus, and the method can further comprise determining, at the controller, the insertion loss by dividing a sampled signal from the second optical tap by a respective sampled signal from the first optical tap.

The device can further comprise an optical ring filter located on the optical input bus, the optical ring filter configured to selectively convey the given optical input signal having the given optical frequency to the optical ring modulator, while preventing other optical input signals from reaching the optical ring modulator and the first optical tap. The method can further comprise tuning, at the controller, the optical ring filter to control a strength of one or more of the given optical input signal and the modulated optical signal in a feedback loop with output from one or more of the first optical tap and the second optical tap. The optical ring filter, the optical ring modulator, optical input bus, the optical output bus, the first optical tap and the second optical tap can form an alignment apparatus configured to maintain the given insertion loss for the given optical frequency using the feedback loop, the device further comprising a plurality of alignment apparatuses, including the alignment apparatus, arranged in series on the optical input bus, each of the plurality of alignment apparatuses configured to maintain a respective given insertion loss for a respective given optical frequency using respective feedback loops, a respective ring filter for each of the plurality of alignment apparatuses configured to convey a respective given optical input signal to a respective optical ring modulator, while preventing the other optical input signals on the optical input bus from reaching a respective optical ring modulator and a respective first optical tap. The device can further comprise an optical multiplexer configured to receive and combine respective modulated optical signals from each of the plurality of alignment apparatuses.

The first optical tap can comprise: a photodiode; and a tunable optical ring filter located between the optical input bus and the photodiode, the tunable optical ring filter configured to: sequentially tune a present filter frequency through a range of frequencies to sequentially produce signals at the photodiode indicative of a strength of optical signals on the optical input bus corresponding to the present filter frequency. The controller can be further in communication with the photodiode and the tunable optical ring filter, the method can further comprise: controlling, at the controller, the tunable optical ring filter to sequentially tune the present filter frequency through the range of frequencies; and receiving, at the controller, the signals from the photodiode, a signal corresponding to the given optical frequency used to determine the current insertion loss of the optical ring modulator. The optical ring filter, the optical ring modulator, the optical output bus, the first optical tap and the second optical tap can form an alignment apparatus configured to maintain the given insertion loss for the given optical frequency using the feedback loop, the device further comprising a plurality of alignment apparatuses, including the alignment apparatus, arranged in series on the optical input bus, each of the plurality of alignment apparatuses configured to maintain a respective given insertion loss for a respective given optical frequency using respective feedback loops, respective optical ring modulators for each of the each of the plurality of alignment apparatuses arranged in series on the optical input bus, the plurality of alignment apparatuses having the first optical tap in common such that a respective current insertion loss is determined from a respective signal corresponding to a given respective optical frequency received as the tunable optical ring filter scans through the range of frequencies. Hence, the method can further comprise tuning, at the controller, each of the alignment apparatuses.

The second optical tap can comprise: a photodiode; and a tunable optical ring filter located between the optical output bus and the photodiode, the tunable optical ring filter configured to: sequentially tune a present filter frequency through a range of frequencies to sequentially produce signals at the photodiode indicative of a strength of modulated optical signals on the optical input bus corresponding to the present filter frequency. The method can further comprise: sequentially tuning, at the controller using the tunable optical ring filter, a present filter frequency through a range of frequencies to sequentially produce signals at the photodiode indicative of a strength of modulated optical signals on the optical input bus corresponding to the present filter frequency.

The optical ring modulator can comprise a voltage control device and the method can further comprise controlling, at the controller, the voltage control device to modulate the given optical input signal.

Yet a further aspect of the specification provides a computer-readable medium storing a computer program, wherein execution of the computer program is for: at a device comprising: an optical input bus configured to convey a given optical input signal having a given optical frequency; an optical ring modulator configured to: receive the given optical input signal from the optical input bus; and modulate the given optical input signal; an optical output bus configured to convey a modulated optical signal from the optical ring modulator; a first optical tap on the optical input bus configured to sample the given optical input signal input to the optical ring modulator; a second optical tap configured to sample the modulated optical signal; and a controller in communication with the optical ring modulator, the first optical tap and the second optical tap, determining, at the controller, a current insertion loss of the optical ring modulator from respective signals received from both the first optical tap and the second optical tap; and, controlling, at the controller, the optical ring modulator in a feedback loop with the current insertion loss until the current insertion loss comprises a given insertion loss. The computer-readable medium can comprise a non-transitory computer-readable medium.

Another aspect of the specification provides a device comprising: an optical bus configured to convey optical signals; an optical tap on the optical bus configured to sample the optical signals, the optical tap comprising: a photodiode; and, a tunable optical ring filter located between the optical bus and the photodiode; and, a controller in communication with the tunable optical ring filter, and the photodiode, the controller configured to: control the tunable optical ring filter to sequentially tune a present filter frequency through a range of frequencies; and, sequentially receive signals from the photodiode, the signals indicative of a strength of optical signals the optical bus corresponding to the present filter frequency.

The device can further comprise: a plurality of ring modulators on the optical bus, and a plurality of optical taps in a one-to-one relationship with plurality of ring modulators, each respective optical tap, of the plurality of optical taps, configured to sample a respective optical signal being modulated by a respective ring modulator, the controller further configured to: determine a current respective insertion loss of each of the plurality of optical ring modulators from respective signals received from each of the plurality of optical taps and the signals from the photodiode; and, control each of the plurality of optical ring modulators in a respective feedback loop with the respective current insertion loss until the respective current insertion loss comprises a respective given insertion loss. The controller can be configured to determine the respective current insertion loss by determining a respective reciprocal insertion loss by: dividing a respective sampled signal from the optical tap by a respective sampled signal from a respective optical tap of the plurality of optical taps.

Yet a further aspect of the specification provides a method comprising: at a device comprising: an optical bus configured to convey optical signals; an optical tap on the optical bus configured to sample the optical signals, the optical tap comprising: a photodiode; and, a tunable optical ring filter located between the optical bus and the photodiode; and, a controller in communication with the tunable optical ring filter, and the photodiode, controlling, at the controller, the tunable optical ring filter to sequentially tune a present filter frequency through a range of frequencies; and, sequentially receiving, at the controller, signals from the photodiode, the signals indicative of a strength of optical signals the optical bus corresponding to the present filter frequency.

The device can further comprise: a plurality of ring modulators on the optical bus, and a plurality of optical taps in a one-to-one relationship with plurality of ring modulators, each respective optical tap, of the plurality of optical taps, configured to sample a respective optical signal being modulated by a respective ring modulator, and method can further comprise: determining, at the controller, a current respective insertion loss of each of the plurality of optical ring modulators from respective signals received from each of the plurality of optical taps and the signals from the photodiode; and, controlling, at the controller, each of the plurality of optical ring modulators in a respective feedback loop with the respective current insertion loss until the respective current insertion loss comprises a respective given insertion loss. The method can further comprise determining, at the controller, the respective current insertion loss by determining a respective reciprocal insertion loss by: dividing a respective sampled signal from the optical tap by a respective sampled signal from a respective optical tap of the plurality of optical taps.

Yet a further aspect of the specification provides a computer-readable medium storing a computer program, wherein execution of the computer program is for: at a device comprising: at a device comprising: an optical bus configured to convey optical signals; an optical tap on the optical bus configured to sample the optical signals, the optical tap comprising: a photodiode; and, a tunable optical ring filter located between the optical bus and the photodiode; and, a controller in communication with the tunable optical ring filter, and the photodiode, controlling, at the controller, the tunable optical ring filter to sequentially tune a present filter frequency through a range of frequencies; and, sequentially receiving, at the controller, signals from the photodiode, the signals indicative of a strength of optical signals the optical bus corresponding to the present filter frequency. The computer-readable medium can comprise a non-transitory computer-readable medium.

Another aspect of the specification provides a device comprising: an optical bus configured to convey optical signals; an optical input bus configured to convey filtered optical signals; at least one optical ring filter in communication with the optical bus and the optical input bus, the at least one optical ring filter configured to filter the optical signals between the optical bus and the optical input bus; an optical output bus configured to convey modulated optical signals produced from the filtered optical signals; an optical ring modulator in communication with the optical input bus and the optical output bus , the optical ring modulator configured to modulate the filtered optical signals to produce the modulated optical signals; one or more optical taps configured to sample one or more of the filtered optical signals on the optical input bus and the modulated optical signals on the optical output bus; and, a controller in communication with the one or more optical taps, the controller configured to tune the optical ring filter to control a strength of one or more of the filtered optical signals on the optical input bus and the modulated optical signals on the optical output bus in a feedback loop with output from the one or more optical taps.

Yet a further aspect of the specification provides a method comprising: at a device comprising: an optical bus configured to convey optical signals; an optical input bus configured to convey filtered optical signals; at least one optical ring filter in communication with the optical bus and the optical input bus, the at least one optical ring filter configured to filter the optical signals between the optical bus and the optical input bus; an optical output bus configured to convey modulated optical signals produced from the filtered optical signals; an optical ring modulator in communication with the optical input bus and the optical output bus , the optical ring modulator configured to modulate the filtered optical signals to produce the modulated optical signals; one or more optical taps configured to sample one or more of the filtered optical signals on the optical input bus and the modulated optical signals on the optical output bus; and, a controller in communication with the one or more optical taps, tuning, at the controller, the optical ring filter to control a strength of one or more of the filtered optical signals on the optical input bus and the modulated optical signals on the optical output bus in a feedback loop with output from the one or more optical taps.

Yet a further aspect of the specification provides a computer-readable medium storing a computer program, wherein execution of the computer program is for: at a device comprising: an optical bus configured to convey optical signals; an optical input bus configured to convey filtered optical signals; at least one optical ring filter in communication with the optical bus and the optical input bus, the at least one optical ring filter configured to filter the optical signals between the optical bus and the optical input bus; an optical output bus configured to convey modulated optical signals produced from the filtered optical signals; an optical ring modulator in communication with the optical input bus and the optical output bus , the optical ring modulator configured to modulate the filtered optical signals to produce the modulated optical signals; one or more optical taps configured to sample one or more of the filtered optical signals on the optical input bus and the modulated optical signals on the optical output bus; and, a controller in communication with the one or more optical taps, tuning, at the controller, the optical ring filter to control a strength of one or more of the filtered optical signals on the optical input bus and the modulated optical signals on the optical output bus in a feedback loop with output from the one or more optical taps. The computer-readable medium can comprise a non-transitory computer-readable medium.

Yet a further aspect of the specification provides a device comprising: an optical bus configured to convey optical signals; at least one optical ring filter in communication with the optical bus the at least one optical ring filter configured to tune the optical signals on the optical bus; an optical output bus configured to convey tuned optical signals from the at least one optical ring filter; one or more optical taps configured to sample the tuned optical signals; and, a controller in communication with the one or more optical taps, the controller configured to tune the optical ring filter to control a strength of the tuned optical signals in a feedback loop with output from the one or more optical taps. The device can further comprise: a second optical output bus and an optical ring modulator, the optical output bus configured to convey the tuned optical signals from the optical ring filter to the optical ring modulator, the second optical output bus configured to convey modulated optical signals from the optical ring modulator, the optical ring modulator configured to modulate the tuned optical signals to produce the modulated optical signals, the one or more optical taps configured to sample the tuned optical signal at one or more of the optical output bus, the second optical output bus, and the optical ring modulator.

Yet a further aspect of the specification provides a method comprising: at a device comprising: an optical bus configured to convey optical signals; at least one optical ring filter in communication with the optical bus the at least one optical ring filter configured to tune the optical signals on the optical bus; an optical output bus configured to convey tuned optical signals from the at least one optical ring filter; one or more optical taps configured to sample the tuned optical signals; and, a controller in communication with the one or more optical taps, tuning, at the controller, the optical ring filter to control a strength of the tuned optical signals in a feedback loop with output from the one or more optical taps. The device can further comprise: a second optical output bus and an optical ring modulator, the optical output bus configured to convey the tuned optical signals from the optical ring filter to the optical ring modulator, the second optical output bus configured to convey modulated optical signals from the optical ring modulator, the optical ring modulator configured to modulate the tuned optical signals to produce the modulated optical signals, the one or more optical taps configured to sample the tuned optical signal at one or more of the optical output bus, the second optical output bus, and the optical ring modulator.

Yet a further aspect of the specification provides a computer-readable medium storing a computer program, wherein execution of the computer program is for: at a device comprising: an optical bus configured to convey optical signals; at least one optical ring filter in communication with the optical bus the at least one optical ring filter configured to tune the optical signals on the optical bus; an optical output bus configured to convey tuned optical signals from the at least one optical ring filter; one or more optical taps configured to sample the tuned optical signals; and, a controller in communication with the one or more optical taps, tuning, at the controller, the optical ring filter to control a strength of the tuned optical signals in a feedback loop with output from the one or more optical taps. The device can further comprise: a second optical output bus and an optical ring modulator, the optical output bus configured to convey the tuned optical signals from the optical ring filter to the optical ring modulator, the second optical output bus configured to convey modulated optical signals from the optical ring modulator, the optical ring modulator configured to modulate the tuned optical signals to produce the modulated optical signals, the one or more optical taps configured to sample the tuned optical signal at one or more of the optical output bus, the second optical output bus, and the optical ring modulator. The computer-readable medium can comprise a non-transitory computer-readable medium.

## BRIEF DESCRIPTIONS OF THE DRAWINGS

For a better understanding of the various implementations described herein and to show more clearly how they may be carried into effect, reference will now be made, by way of example only, to the accompanying drawings in which:

Fig. 1 depicts a schematic diagram of a device for resonance wavelength alignment for ring modulators, according to non-limiting implementations.

Fig. 2 depicts a schematic diagram of transmission power profiles of an optical ring modulator under different operating conditions, and specifically depicting power as a function of frequency at two applied voltages, according to non-limiting implementations.

Fig. 3 depicts a block diagram of a flowchart of a method for resonance wavelength alignment for ring modulators, according to non-limiting implementations.

Fig. 4 depicts a schematic diagram of a device for resonance wavelength alignment for ring modulators, according to alternative non-limiting implementations.

Fig. 5 depicts a schematic diagram of a device for resonance wavelength alignment for ring modulators and power output control, according to alternative non-limiting implementations.

Fig. 6 depicts a block diagram of a flowchart of a method for controlling an optical ring filter, according to non-limiting implementations.

Fig. 7 depicts a schematic diagram of a multiple-bus-multiple-ring device for resonance wavelength alignment for ring modulators, according to alternative non-limiting implementations.

Fig. 8 depicts a schematic diagram of a single-bus-multiple-ring device for resonance wavelength alignment for ring modulators, according to alternative non-limiting implementations.

Fig. 9 depicts a block diagram of a flowchart of a method for controlling a ring resonator based optical scanning analyzer, according to non-limiting implementations.

Fig. 10 depicts a schematic diagram of a single-bus-multiple-ring device for resonance wavelength alignment for ring resonators, according to alternative non-limiting implementations.

Fig. 11 depicts a schematic diagram of variable optical attenuator, according to alternative non-limiting implementations

## DETAILED DESCRIPTION

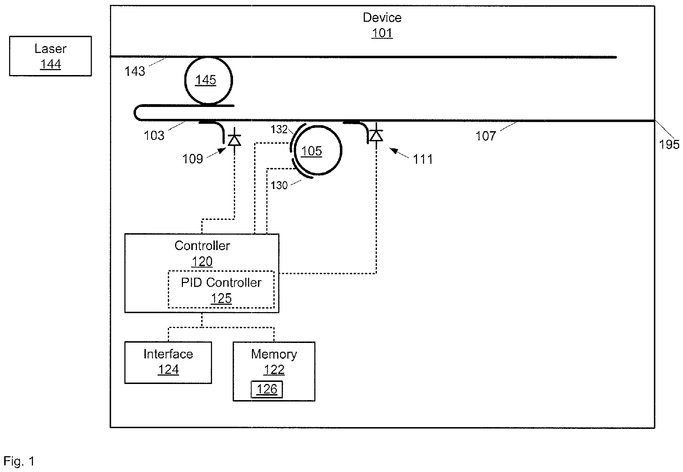

Fig. 1 depicts a device 101 comprising: an optical input bus 103 configured to convey a given optical input signal having a given optical frequency; an optical ring resonator 105 configured to: receive the given optical input signal from optical input bus 103; and modulate the given optical input signal; an optical output bus 107 configured to convey a modulated optical signal from optical ring resonator 105; a first optical tap 109 on optical input bus 103 configured to sample the given optical input signal input to optical ring resonator 105; a second optical tap 111 configured to sample the modulated optical signal; a controller 120 in communication with optical ring resonator 105, first optical tap 109 and second optical tap 111, controller 120 configured to: determine a current insertion loss of optical ring resonator 105 from respective signals received from both first optical tap 109 and second optical tap 111; and, control optical ring resonator 105 in a feedback loop with the current insertion loss until the current insertion loss comprises a given insertion loss. Optical ring resonator will hereafter be interchangeably referred to as ring 105. As depicted, device 101 further comprises a memory 122 and an interface 124 each interconnected with controller 120. In particular, memory 122 stores an application 126, which, when processed by controller 120, enables controller to implement the feedback loop. Furthermore, as depicted controller 120 further comprises an optional proportional-integral-derivative (PID) controller 125; as such, in some implementations controller 120 can implement the feedback loop using PID controller 125, however other types of controllers and/or feedback loops are within the scope of present implementations.

As depicted, ring 105 comprises a heater 130, and controller 120 is configured to control heater 130 when controlling optical ring resonator 105 in the feedback loop.

Furthermore, as depicted, ring 105 further comprises a voltage control device 132 and controller 120 is further configured to control voltage control device 132 to modulate the given optical input signal. For example, while not depicted, controller 120 can comprise a modulation voltage driver for external modulation of voltage control device 132 based, for example, on input received from interface 124. Hence, a modulated optical signal produced by ring 105 has data encoded therein, and can be conveyed through an optical telecommunication network. Such data can include, but is not limited to, voice, audio, video, images, web data, browser data, and the like.

Both heater 130 and voltage control device 132 are appreciated to be depicted schematically; for example, while both heater 130 and voltage control device 132 are depicted as being around a portion of an outside of ring 105, in practise, heater 130 and/or voltage control device 132 can be located inside ring 105 and/or in one or more planes adjacent a depicted plane of ring 105. For example, voltage control device 132 can comprise electrodes "above" and "below" ring 105 (e.g. out of and into the page of Fig. 1), which are controlled by controller 120.

Furthermore, in general, a resonance and/or reference frequency of an optical ring resonator can be coarsely controlled by controlling a circumference and/or a refractive index profile of an optical ring resonator (e.g. during fabrication thereof) and/or finely controlled by controlling the temperature of the optical ring resonator. As such, heater 130 can be used to coarsely control the refractive index and therefore a reference resonance frequency of ring 105, while voltage control device 132 is used to induce changes and/or small changes in a refractive index of ring 105 to modulate the reference resonance frequency which in turn causes optical signals on input bus 103 to be modulated.

As depicted, device 101 further comprises: an optical bus 143 configured to receive optical signals from a light source, as depicted a laser 144; and an optical ring filter 145 in communication with optical bus 143 and optical input bus 103, optical ring filter 145 configured to convey an optical signal of the given frequency from the optical bus 143 to optical input bus 103. For example, laser 144 can comprise a distributed Bragg reflector laser, an external cavity laser and the like configured to output optical signals (e.g. light) of a plurality of different frequencies, for example with a constant spacing, into optical bus 143; optical ring filter 145 can hence be configured to resonate with a given frequency of the plurality of different frequencies such that an optical signal of the given frequency is conveyed from optical bus 143 to optical input bus 103, where the light of the given frequency is modulated by ring 105 to produce a modulated optical signal. However, optical ring filter 145 can be optional when laser 144 has a single wavelength output, and hence any filtering of optical signals by filter 145 would be redundant.

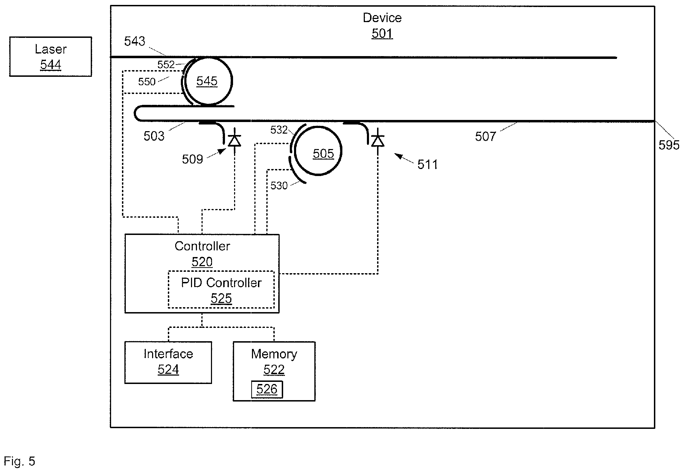

As such, optical ring filter 145 is generally optically coupled to both optical bus 143 and optical input bus 103. Similarly, ring 105 is generally coupled to optical input bus 103. Furthermore, optical ring filter 145 is tuned to the optical frequency that is modulated by optical ring resonator 105 and filters out other frequencies on optical bus 143. While not depicted, optical ring filter 145 also comprises a heater and voltage control device, respectively similar to heater 130 and controller 120 can be configured to maintain the filtering properties of optical ring filter 145 by controlling one or more of the heater and voltage control device of optical ring filter 145; such implementations are described below with respect to Fig. 5.

In general, the modulated optical signal is conveyed out of device 101 on optical output bus 107 at an output 195, for example to a fiber optic, which in turn conveys the modulated optical signal through an optical telecommunication network to a receiver, where the optical modulated optical signal is received and demodulated to retrieve data encoded therein.

Hence, device 101 can generally comprises a transmitter in an optical telecommunications system configured to generate and transmit a modulated optical signal at a given optical frequency (and a given data rate), the modulated optical signal having data encoded therein. As such, the given frequency optical frequency can comprise a given carrier optical frequency including, but not limited to, an optical frequency used in optical telecommunications in a range of about 184.5-238 THz; however other optical frequencies are within the scope of present implementations.

While not depicted, device 101 can be further configured to optically interface with an optical fiber (e.g. at output 195), and device 101 can hence transmit the modulated optical signal through the optical fiber, which can be hundreds of kilometers long (or more). Device 101 can hence comprise a modulating optical signal generator including, but not limited to, one or more lasers, including laser 144 which can be internal or external (as depicted) to device 101, one more light emitting diodes (LEDs), and the like, as well as one or more interfaces (such as interface 124) to data generating devices, including, but not limited to, servers, personal computers, laptops, mobile devices and the like, and the like.

It should be emphasized, however, that the structure of device 101 in Fig. 1 is purely an example, and contemplates a device that can be used for optical data communications. In particular, at least the bus lines, the ring structures and at least a portion of the taps of device 101 can be formed from a photonic integrated circuit (PIC); indeed, any components of device 101 that convey and/or interact with optical signals can be formed from a PIC. In particular non-limiting implementations, components of device 101 that convey and/or interact with optical signals can be formed from a silicon based PIC, however other materials are within the scope of present implementations.

Indeed, for clarity, in Fig. 1 and through-out the present specification, solid lines connecting components depict links and/or optical busses that include flow of optical signals there between, while dashed lines connecting components depict links that include flow electrical data and/or electrical signals there between.

Controller 120 can comprise a processor and/or a plurality of processors, including but not limited to one or more central processors (CPUs) and/or one or more processing units; either way, controller 120 comprises a hardware element and/or a hardware processor. Indeed, in some implementations, controller 120 can comprise an ASIC (application-specific integrated circuit) and/or an FPGA (field-programmable gate array) specifically configured to implement the functionality of controller 120. Hence, controller 120 is not necessarily a generic computing device and/or a generic processor and/or a generic component of computing controller 120, but a device specifically configured to implement specific functionality; such specific functionality includes controlling ring 105 in a feedback loop to a given insertion loss as described in further detail below. For example, controller 120 can specifically comprise an engine configured to control ring in a feedback loop to a given insertion loss.

Memory 122 can comprise a non-volatile storage unit (e.g. Erasable Electronic Programmable Read Only Memory ("EEPROM"), Flash Memory) and a volatile storage unit (e.g. random access memory ("RAM")). Programming instructions that implement the functional teachings of controller 120 and/or device 101 as described herein are typically maintained, persistently, in memory 122 and used by controller 120 which makes appropriate utilization of volatile storage during the execution of such programming instructions. Those skilled in the art recognize that memory 122 is an example of computer readable media that can store programming instructions executable on controller 120. Furthermore, memory 122 is also an example of a memory unit and/or memory module and/or a non-volatile memory.

In particular, memory 122 stores application 126 that when processed by controller 120 enables controller to: determine a current insertion loss of optical ring resonator 105 from respective signals received from both first optical tap 109 and second optical tap 111; and, control optical ring resonator 105 in a feedback loop with the current insertion loss until the current insertion loss comprises a given insertion loss.

Interface 124 can comprise any wired and/or wireless interface configured to receive data used to modulate optical signals. As such, interface 124 is configured to correspond with communication architecture that is used to implement one or more communication links used to receive data, including but not limited to any suitable combination of, cables, serial cables, USB (universal serial bus) cables, and wireless links (including, but not limited to, WLAN (wireless local area network) links, WiFi links, WiMax links, cell-phone links, Bluetooth™ links, NFC (near field communication) links, packet based links, the Internet, analog networks, access points, and the like, and/or a combination). However, interface 124 is generally non-limiting and any interface used in optical telecommunication devices and/or optical telecommunication transmitters is within the scope of present implementations.

PID controller 125 generally calculates an "error value" as the difference between a measured process variable and a desired setpoint, and attempts to minimize the error over time by adjustment of a control variable, such as power supplied to heater 130, to a new value determined by a weighted sum. However, other types of controllers and/or control mechanisms and/or feedback loops are within the scope of present implementations.

Each of optical taps 109, 111 comprise a fiber tap, and the like, that diverts a fraction of the light from optical bus, including, but not limited to beam splitters, bends in busses 103, 107, and the like, and a respective photodiode arranged so that optical signals (e.g. light) from the fiber tap illuminate the photodiode and produce an electrical signal which is conveyed to controller 120 for processing. Each of optical taps 109, 111 can be incorporated into a PIC structure of device 101. Furthermore, as depicted optical tap 111 comprises a through port. In addition, each optical bus 103, 107 can comprise optical waveguides, for example, in PIC structure, and further can be interchangeably referred to as waveguides 103, 107.

In general, device 101 is controlled to maintain a given insertion loss at ring 105. For example, prior art systems generally monitor power output from a ring modulator and attempt to maintain a given power at the ring by tuning the ring according to the output power. However, such systems assume that aging does not occur at a light source and/or that coupling does not change between rings and optical buses; hence, attempting to maintain a given power can result in a ring being tuned away from the given frequency that is being modulated by the ring. For example, if output power decreases, then it is assumed that the resonance frequency of the ring has drifted away from the frequency being modulated and a controller changes the resonance frequency of the ring, for example by controlling a respective heater; however, if the output power is decreasing due to the decrease in the input power, then changing the resonance frequency of the ring results in a decrease in the insertion loss leading to lower optical eye extinction ratio for worse performance.

In contrast, in present implementations first optical tap 109 is used to measure the input power, Pi of the optical signal, and the second optical tap 111 is used to measure the output power, Po, and insertion loss, ER, IL, is determined from:

$$IL = Po/Pi \dots\dots\dots\dots\dots\dots\dots\text{Equation (1)}$$

Hence, insertion loss represents a ratio of a modulated optical signal to an unmodulated optical signal.

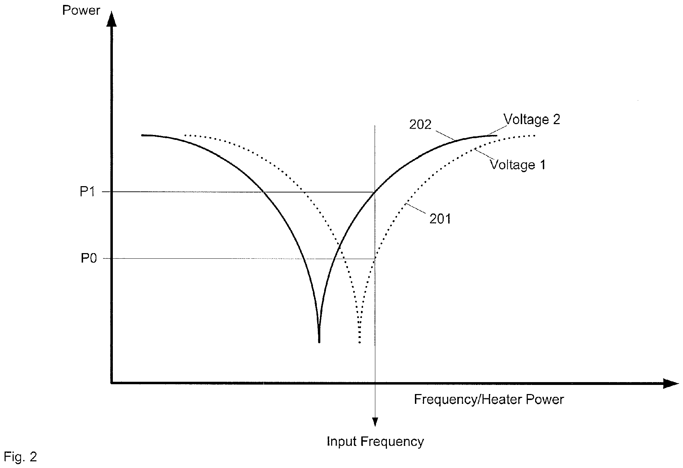

Attention is next directed to Fig. 2 which depicts schematic transmission magnitude profiles 201, 202 of ring 105 as a function of frequency (and/or heater power) for two different applied voltages, as applied by voltage control device 132 as controlled by controller 120, as well as a line corresponding to an input frequency that is being modulated by ring 105. For example, for each of a Voltage 1 (profile 201) and a Voltage 2 (profile 202, and Voltage 2 being different from Voltage 1), in each of profiles 201, 202 a resonance frequency of ring 105 corresponds to a minimum of the corresponding transmission magnitude profile 201, 202; the minimum for each profile 201, 202 can hence also be referred to as reference frequency. In other words, the transmission magnitude profile (and the resonance frequency) shifts as a function of voltage. (It is further noted that the transmission magnitude profiles 201, 202 of Fig. 2 could also be depicted as a function of wavelength, however the plot directions of each of the curves would be reversed as wavelength and frequency are inversely related (e.g a falling slope for the frequency curve, as depicted, would correspond to a rising slope of a wavelength curve)).

It is yet further noted that alternatively, in Fig. 2 the optical signal is being modulated using the "blue" side of the depicted curves (e.g. the frequency being modulated is at higher frequency and/or heater power than the frequency where power is at a minimum - the reference frequency - for each curve).

Hence, voltage control device 132 is used to modulate the optical signal being conveyed through optical bus 103. Furthermore, insertion loss can be determined from an input to ring 105 as compared to an output from ring 105. For example, the photodiode at optical tap 111 will generally measure an average of power output at ring 105 at the two applied voltage levels, P0 and P1 (e.g. P0 corresponding to a "0" generally corresponding to a "0" in a binary data stream on optical output bus 107 and P1 generally corresponding to a "1" in a binary data stream on optical output bus 107) as data rates tend to be very high in optical communication systems for example on the order of 28Gb/s.

Hence, in Equation (1), Po corresponds to an average of powers of a modulated optical signal (e.g. an average of P0 and P1 as depicted in Fig. 2), while Pi corresponds to an average of an unmodulated optical signal.

Further, measured power need not be measured in watts, and the like, but can be measured in any units which can correspond to power and/or are proportional to power, in either absolute units and/or relative units, including volts, amps and the like; for example, controller 120 can include an analog to digital converter (ADC) which converts signals from the photodiodes of optical taps 109, 111 to values on a scale of 0 to 255, and the like.

In any event, in device 101, a current insertion loss is determined from output from optical taps 109, 111, and controller 120 generally controls heater 130 to change the insertion loss to a target insertion loss, for example as stored at memory 122 and/or at application 126.

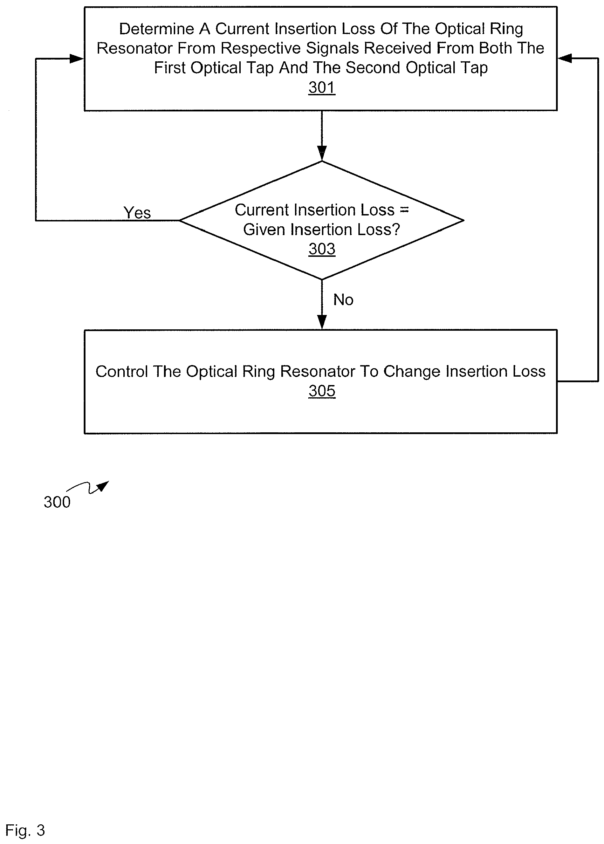

Attention is now directed to Fig. 3 which depicts a flowchart of a method 300 for controlling an optical ring resonator, according to non-limiting implementations. In order to assist in the explanation of method 300, it will be assumed that method 300 is performed using device 101, and specifically by controller 120, for example when controller 120 is implementing application 126. Indeed, method 300 is one way in which device 101 and/or controller 120 can be configured. Furthermore, the following discussion of method 300 will lead to a further understanding of device 101 and its various components and/or controller 120. However, it is to be understood that device 101 and/or controller 120 and/or method 300 can be varied, and need not work exactly as discussed herein in conjunction with each other, and that such variations are within the scope of present implementations.

Regardless, it is to be emphasized, that method 300 need not be performed in the exact sequence as shown, unless otherwise indicated; and likewise various blocks may be performed in parallel rather than in sequence; hence the elements of method 300 are referred to herein as "blocks" rather than "steps". It is also to be understood, however, that method 300 can be implemented on variations of system 300 as well.

It is furthermore assumed in method 300 that memory 122 stores a given insertion loss that is a target insertion loss to which device 101 is to be controlled. The target insertion loss can be provisioned at device 101 in a provisioning process. In general, a target insertion loss can be determined from the transmission profile curves of Fig. 2. However, in other implementations, the target insertion loss can comprise a measured insertion loss determined from respective signals received from both first optical tap 109 and second optical tap 111, for example upon start-up of device 101 and/or after a given time period and/or after components of device 101 have stabilized; in these implementations the target insertion loss is measured and stored at memory 122.

At block 301, controller 120 determines a current insertion loss of optical ring resonator 105 from respective signals received from both first optical tap 109 and second optical tap 111.

At block 303, controller 120 compares the current insertion loss with the given insertion loss (i.e. the target insertion loss). When the current insertion loss is equal to the given insertion loss and/or about equal to the given insertion loss and/or a measured error is within a given control error range (as determined by PID controller 125) (i.e. a "Yes" decision at block 303), block 301 repeats.

However, when the current insertion loss is not equal to the given insertion loss and/or the measured error is outside the given control error range (as determined by PID controller 125) (i.e. a "No" decision at block 303), at block 305, controller 120 controls optical ring resonator 105 to change the insertion loss to the given insertion loss. For example, controller 120 can increase or decrease the heater power to adjust the insertion loss towards the given insertion loss. For example, heater power can be adjusted to shift the transmission profiles of Fig. 2, which can also be stored at memory 122 and/or at application 126.

Specifically, the insertion loss can be increased or decreased using heater power and dependent on the operation slope of the profiles 201, 202 of Fig. 2. For example, when power is being modulated on the "blue" slope of the profiles 201, 202 of Fig. 2 (e.g. the frequency of the optical signal and/or light is greater than a frequency and/or a reference frequency where power is at a minimum for the through-path of the ring resonator modulating the optical signal and/or light), heater temperature can to be decreased when the insertion loss is low, and increased when the insertion loss is high.

Hence, in method 300, controller 120 controls optical ring modulator 105 in a feedback loop with the current insertion loss until the current insertion loss comprises a given insertion loss.

In Fig. 1, second optical tap 111 is in communication with optical output bus 107 such that the modulated optical signal is sampled at optical output bus 107, and controller 120 is configured to determine the insertion loss by dividing a sampled signal from the second optical tap by a respective sampled signal from first optical tap 109 using, for example, Fig. 1. However, in other implementations, second optical tap can be in communication with ring 105.

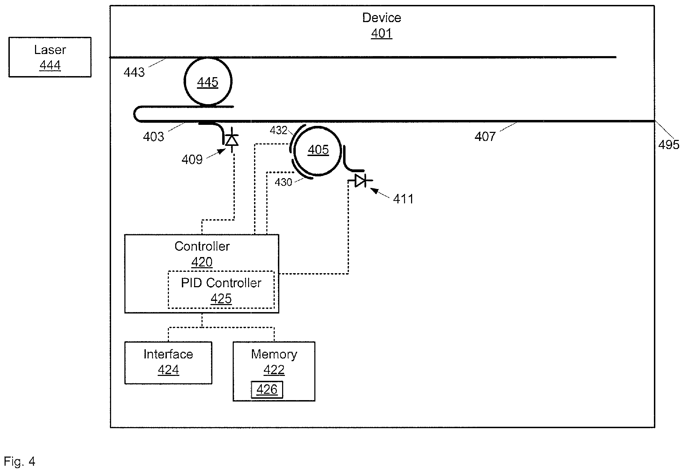

For example, attention is next directed to Fig. 4, which is substantially similar to Fig. 1, with like elements having like number but in a "400" series rather than a "100" series. Hence, Fig. 4 depicts a device 401 comprising: an optical input bus 403 configured to convey a given optical input signal having a given optical frequency; an optical ring modulator 405 configured to: receive the given optical input signal from optical input bus 403; and modulate the given optical input signal; an optical output bus 407 configured to convey a modulated optical signal from optical ring modulator 405 (e.g. to an output 495); a first optical tap 409 on optical input bus 403 configured to sample the given optical input signal input to optical ring modulator 405; a second optical tap 411 configured to sample the modulated optical signal; a controller 420 in communication with optical ring modulator 405, first optical tap 409 and second optical tap 411, controller 420 configured to: determine a current insertion loss of optical ring modulator 405 from respective signals received from both first optical tap 409 and second optical tap 411; and, control optical ring modulator 405 in a feedback loop with the current insertion loss until the current insertion loss comprises a given insertion loss. Device 401 further comprises a memory 422 and an interface 424 interconnected with controller 420, memory 422 storing an application 426, as well as an optical bus 443 configured to receive optical signals from a laser 444 and an optical ring filter 445 in communication with both of busses 403, 443. Further, optical ring modulator 405 comprises a respective heater 430 and a respective voltage control device 432. An optional PID controller 425 is also shown.

However, in comparison to device 101, at device 401 second optical tap 411 is in communication with optical ring modulator 405 such that the modulated optical signal is sampled at optical ring modulator 405; hence second optical tap 411 comprises a drop port. Furthermore, controller 420 is configured to determine insertion loss in method 300 by determining a reciprocal insertion loss by: dividing a sampled signal from first optical tap 409 by a respective sampled signal from second optical tap 411. Hence, when method 300 is implemented in device 401, reciprocal insertion loss IL' is determined from:

$$IL'=Po'/Pi' \dots\dots\dots\dots\dots\dots Equation\ (2)$$

where Pi' is the measured optical signal at first optical tap 409 (and will be similar to power Pi measured at first optical tap 109), and Po' is the measured optical signal at second optical tap 411. Relative to power measured at second optical tap 111, power measured at second optical tap 411 will increase and decrease in a manner opposite to that of second optical tap 111 of device 101. Hence, a control slope for reciprocal insertion loss IL' in device 401 will be opposite that of insertion loss IL in device 101.

Otherwise device 401 functions similar to device 101 (other than the control slope being inverted.

Attention is next directed to Fig. 5, which is substantially similar to Fig. 1, with like elements having like number but in a "500" series rather than a "100" series. Hence,

Fig. 5 depicts a device 501 comprising: an optical input bus 503 configured to convey a given optical input signal having a given optical frequency; an optical ring modulator 505 configured to: receive the given optical input signal from optical input bus 503; and modulate the given optical input signal; an optical output bus 507 configured to convey a modulated optical signal from optical ring modulator 505 (e.g. to an output 595); a first optical tap 509 on optical input bus 503 configured to sample the given optical input signal input to optical ring modulator 505; a second optical tap 511 configured to sample the modulated optical signal; a controller 520 in communication with optical ring modulator 505, first optical tap 509 and second optical tap 511, controller 520 configured to: determine a current insertion loss of optical ring modulator 505 from respective signals received from both first optical tap 509 and second optical tap 511; and, control optical ring modulator 505 in a feedback loop with the current insertion loss until the current insertion loss comprises a given insertion loss. Device 501 further comprises a memory 522 and an interface 524 interconnected with controller 520, memory 522 storing an application 526, as well as an optical bus 543 configured to receive optical signals from a laser 544 and an optical ring filter 545 in communication with both of busses 503, 543. An optional PID controller 525 is also shown.

Optical ring filter 545 is generally located on optical bus 543 which can also be referred to as an optical input bus as optical bus 543 comprises a first optical path into device 501. Optical ring filter 545 is generally configured to selectively convey a given optical input signal having a given optical frequency to optical ring modulator 505, while preventing other optical input signals from reaching optical ring modulator 505 and first optical tap 509. In other words, optical ring filter 545 is tuned to the same optical frequency as optical ring modulator 505 and filters out other frequencies on optical bus 543.

As such, optical ring filter 545 comprises a heater 550 and optionally a voltage control device 552 respectively similar to heater 530 and voltage control device 532.

However, in contrast to devices 101, 401, controller 520 is depicted as in communication with heater 550 and voltage control device 552. Furthermore, controller 520 is further configured to tune optical ring filter 545 to control a strength of one or more of a given optical input signal to optical ring modulator 505 and the modulated optical signal from optical ring modulator 505 in a feedback loop with output from one or more of first optical tap 509 and second optical tap 511.

For example, optical ring filter 545 can be tuned, by controller 520 controlling heater 550 and/or voltage control device 552, to maximize a measured signal at one or more of first optical tap 509 and second optical tap 511. Hence, when drift and/or aging occurs in either of ring 545 and/or coupling between ring 545 and busses 543, 503, such that a resonance of filter 545 drifts and power output therefrom decreases, controller 520 can control heater 550 and/or voltage control device 552 to again maximize the power output therefrom. Changes in power are monitored at one or more of first optical tap 509 and second optical tap 511. Otherwise device 501 functions similar to device 101.

Hence, two feedback loops are implemented in device 501: method 300 in which insertion loss is controlled at optical ring modulator 505, and another feedback loop between optical ring filter 545 and one or more of first optical tap 509 and second optical tap 511 in which power output of optical ring filter 545 is controlled.

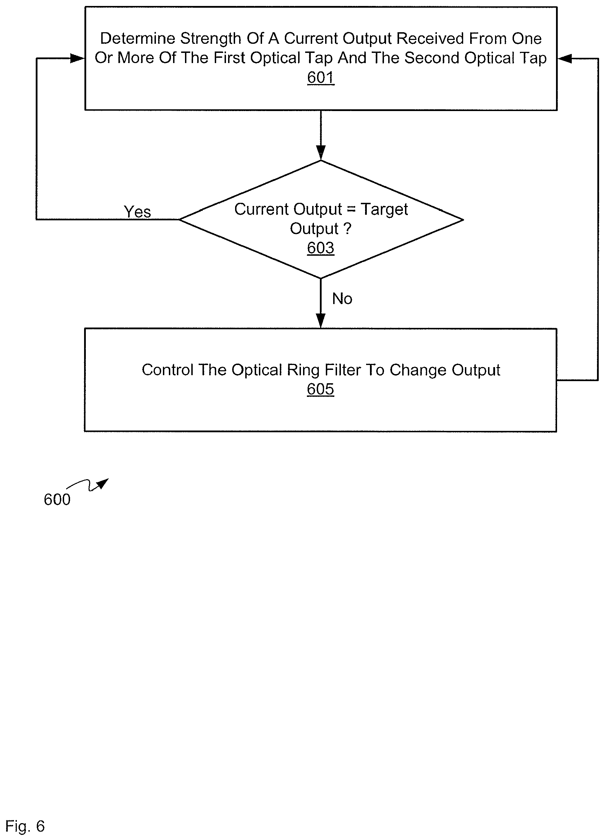

For example, attention is now directed to Fig. 6 which depicts a flowchart of a method 600 for controlling an optical ring filter, according to non-limiting implementations. In order to assist in the explanation of method 600, it will be assumed that method 600 is performed using device 501, and specifically by controller 520, for example when controller 520 is implementing application 526. Indeed, method 600 is one way in which device 501 and/or controller 520 can be configured. Furthermore, the following discussion of method 600 will lead to a further understanding of device 501 and its various components and/or controller 520. However, it is to be understood that device 501 and/or controller 520 and/or method 600 can be varied, and need not work exactly as discussed herein in conjunction with each other, and that such variations are within the scope of present implementations.

Regardless, it is to be emphasized, that method 600 need not be performed in the exact sequence as shown, unless otherwise indicated; and likewise various blocks may be performed in parallel rather than in sequence; hence the elements of method 600 are referred to herein as "blocks" rather than "steps". It is also to be understood, however, that method 600 can be implemented on variations of system 600 as well.

It is furthermore assumed in method 600 that device 501 comprises: an optical bus 543 configured to convey optical signals; an optical input bus 503 configured to convey filtered optical signals; at least one optical ring filter 545 in communication with optical bus 543 and optical input bus 503, at least one optical ring filter 545 configured to filter the optical signals between optical bus 543 and optical input bus 503; an optical output bus 507 configured to convey modulated optical signals produced from the filtered optical signals; an optical ring modulator in communication with optical input bus 503 and optical output bus 507, optical ring modulator 505 configured to modulate the filtered optical signals to produce the modulated optical signals; one or more optical taps 509, 511 configured to sample one or more of the filtered optical signals on optical input bus 503 and the modulated optical signals on optical output bus 507; and, a controller 520 in communication with one or more optical taps 509, 511, controller 520 to implement method 600 described hereafter.

At block 601, controller 520 determines a strength of a current output received from one or more of first optical tap 509 and second optical tap 511.

At block 603, controller 520 compares the current output with a target output. When the current output is equal to the target output and/or about equal to the target output and/or a measured error is within a given control error range (as determined by PID controller 525) (i.e. a "Yes" decision at block 603), block 601 repeats.

However, when the current output is not equal to the target output and/or outside a given percentage of the target output (i.e. a "No" decision at block 603), at block 605, controller 520 controls optical ring modulator 505 to change the current output to the target output. For example, controller 520 can increase or decrease the heater power at heater 550 to adjust the current output of or more of first optical tap 509 and second optical tap 511 towards the target output for example to maximize the output received from one or more of first optical tap 509 and second optical tap 511. Specifically, when the output from one or more of first optical tap 509 and second optical tap 511 is determined to be smaller or larger than the target output, the heater power can be increased or decreased accordingly to reach the target output.

In some implementations, the target output can comprise a maximum of output received from one or more of first optical tap 509 and second optical tap 511. However, in other implementations, the target output can comprise a given target output provisioned at memory 522 and/or at application 526 based, for example, on a target input power Pi and/or a target output power Po.

Either way, in method 600, controller 520 is generally configured to tune optical ring filter 545 to control a strength of one or more of the filtered optical signals on optical input bus 503 and the modulated optical signals on optical output bus 507 in a feedback loop with output from one or more optical taps 509, 511.

Such a feedback loop can also occur at device 401, but using one or more of first optical tap 409 and second optical tap 411.

Furthermore, as optical ring filter 545 is tunable, and can control a strength of input and/or output from optical ring modulator 505, optical ring filter 545 and one or more of optical taps 509, 511 can also be referred to as a variable optical attenuator (VOA) that can be integrated into a PIC structure. While such a PIC-based variable optical attenuator is described with reference to device 501, such a PIC-based variable optical attenuator can be integrated into other devices, including PIC-based devices, where controlling a strength of optical signals on an optical bus, and specifically signals being modulated by a ring modulator, is to occur. Hence, optical ring filter 545 and one or more of optical taps 509, 511 (which can also be provided with a controller implementing method 600) can be provided independent of device 501 and/or integrated into other types of devices.

In general, each of method 300 and method 600 can be implemented in any of devices 101, 401, 501, with each of method 300 and method 600 implemented on an ongoing basis and/or periodically. Furthermore, in some of these implementations, method 300 can be implemented more frequently then method 600. It is furthermore appreciated that as method 300 is implemented, the power of modulated optical signals on output bus 507 can vary which in turn can indicate a drop in power of optical signals filtered by optical ring filter 545; hence, method 600 can be used to maintain an absolute output power, while method 300 can be used to maintain an insertion loss.

Furthermore, it is appreciated that optical ring filter 545, optical ring modulator 505, optical input bus 503, optical output bus 507, first optical tap 509 and second optical tap 511 form an alignment apparatus configured to maintain a given insertion loss for the given optical frequency using the feedback loop.

It is furthermore appreciated that each of devices 101, 401, 501, can comprise than one alignment apparatus.

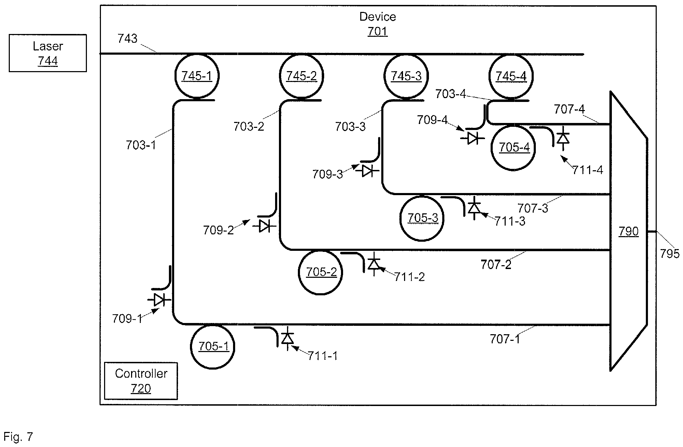

For example, attention is next directed to Fig. 7 which depicts a device 701 that is substantially similar to device 501, with like elements having like numbers but in a "700" series rather than a "500" series. In particular, device 701 comprises a plurality of optical input buses 703-1, 703-2, 703-3, 703-4, a plurality of optical ring modulators 705-1, 705-2, 705-3, 705-4, a plurality of optical output buses 707-1, 707-2, 707-3, 707-4, a plurality of first optical taps 709-1, 709-2, 709-3, 709-4, a plurality of second optical taps 711-1, 711-2, 711-3, 711-4, a common controller 720, an optical bus 743 configured to receive optical signals from a laser 744 and a plurality of optical ring filters 745-1, 745-2, 745-3, 745-4. While not depicted, it is assumed that device 701 further comprises a memory storing an application, similar to memory 522 and application 526, and an interface similar to interface 524. While not depicted for clarity, it is further assumed that each of plurality of optical ring modulators 705-1, 705-2, 705-3, 705-4 and plurality of optical ring filters 745-1, 745-2, 745-3, 745-4 comprises a respective heater and voltage control device. Furthermore, for clarity, optical links between components in Fig. 7 are depicted but electrical and/or data links are not depicted; it is nonetheless assumed that controller 720 is in communication with each of optical taps 709-1, 709-2, 709-3, 709-4, 711-1, 711-2, 711-3, 711-4 and is further configured to tune and/or control each of plurality of optical ring modulators 705-1, 705-2, 705-3, 705-4, and plurality of optical ring filters 745-1, 745-2, 745-3, 745-4.

Furthermore, plurality of optical input buses 703-1, 703-2, 703-3, 703-4 will be hereafter referred to, collectively, as optical input busses 703 and, generically, as an optical input bus 703; plurality of optical ring modulators 705-1, 705-2, 705-3, 705-4 will be hereafter referred to, collectively, as optical ring modulators 705 and, generically, as an optical ring modulator 705; plurality of optical output buses 707-1, 707-2, 707-3, 707-4 will be hereafter referred to, collectively, as optical output busses 707 and, generically, as an optical output bus 707; plurality of first optical taps 709-1, 709-2, 709-3, 709-4 will be hereafter referred to, collectively, as first optical taps 709 and, generically, as a first optical tap 709; plurality of second optical taps 711-1, 711-2, 711-3, 711-4 will be hereafter referred to, collectively, as second optical taps 711 and, generically, as a second optical tap 711; and plurality of optical ring filters 745-1, 745-2, 745-3, 745-4 will be hereafter referred to, collectively, as optical ring filters 745 and, generically, as an optical ring filter 745.

Each respective combination of optical ring filter 745, optical ring modulator 705, the optical input bus 703, optical output bus 707, first optical tap 709 and second optical tap 711 form an alignment apparatus configured to maintain the given insertion loss for a given respective optical frequency using a feedback loop, for example using method 300. Each respective group of optical ring filter 745, optical ring modulator 705, the optical input bus 703, optical output bus 707, first optical tap 709 and second optical tap 711 in each alignment apparatus is designated with a common identifier appended onto each number, for example "-1", "-2", "-3", "-4".

Hence device 701 comprising a plurality of alignment apparatuses arranged in series on optical input bus 743, each of the plurality of alignment apparatuses configured to maintain a respective given insertion loss for a respective given optical frequency using respective feedback loops, a respective ring filter 745 for each of the plurality of alignment apparatuses configured to convey a respective given optical input signal to a respective optical ring modulator 705, while preventing other the optical input signals on optical input bus 743 from reaching a respective optical ring modulator 705 and a respective first optical tap 709.

Furthermore, each alignment apparatus in device 701 is generally tuned to a different respective optical frequency on optical bus 743, such that each alignment apparatus receives a given respective optical frequency from optical bus 743, filters out other frequencies on optical bus 743, and modulates the given respective optical frequency.

Furthermore, each alignment apparatus can be controlled by controller 720 to one or more of control insertion loss of a respective optical ring modulator 705 in a feedback loop using method 300 and control resonance of a respective optical ring filter 745 using method 600.

While each optical output bus 707 can interface with a respective output (e.g. to output a respective modulated optical output signal to a respective optical fiber), as depicted, device 701 further comprises an optical multiplexer 790 configured to receive and combine respective modulated optical signals from each of the plurality of alignment apparatuses. Specifically, optical multiplexer 790 is connected to each of optical output buses 707 and combines modulated optical signals from each into a common optical output signal. The common optical output signal can be output at a common output 795 and hence onto a common optical fiber (not depicted) and transmitted to a receiver in an optical telecommunications network, where the common optical output signal is de-multiplexed.

While four alignment apparatuses are depicted in device 701, device 701 can comprise fewer alignment apparatuses or more alignment apparatuses, for example one for each optical carrier frequency to be modulated on optical bus 743. Light that is not modulated can be discarded, for example at a light dump on optical input bus 743.

Furthermore, the configuration of device 701 can be referred to as a multiple-bus-multiple-ring configuration as the modulation for each optical frequency occurs on different busses.

However, other implementations can be used to multiplex modulated optical signals and control insertion loss.

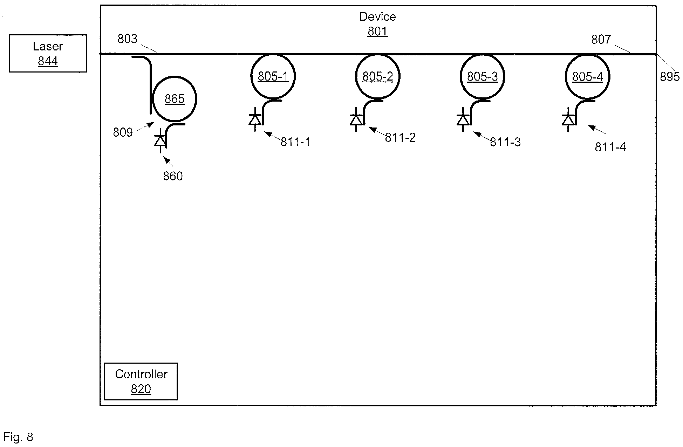

For example, attention is next directed to Fig. 8 which depicts a device 801 that is similar to device 701, with like elements having like number however in an "800" series rather than a "700" series. However, device 801 comprises a common input bus 803, which receives optical signals from a laser 844, and conveys optical signals to a plurality of optical ring modulators 805-1, 805-2, 805-3, 805-4, and a common output bus 807 which outputs multiplexed modulated optical signals at an output 895. Device 801 further comprises a first optical tap 809 on optical input bus 803, and a plurality of second optical taps 811-1, 811-2, 811-3, 811-3, one for each of plurality of optical ring modulators 805-1, 805-2, 805-3, 805-4. Device 801 further comprises a controller 820 in communication with respective heaters and respective voltage control devices of each of plurality of optical ring modulators 805-1, 805-2, 805-3, 805-4, as well as each of first optical tap 809 and second optical taps 811-1, 811-2, 811-3, 811-3, though electrical links there between are omitted for clarity, similar to Fig. 7.

Hence, while not depicted for clarity, it is further assumed that each of plurality of optical ring modulators 805-1, 805-2, 805-3, 805-4 comprises a respective heater and voltage control device. Furthermore, while not depicted, it is assumed that device 801 further comprises a memory storing an application, similar to memory 522 and application 526, and an interface similar to interface 524.

Furthermore, plurality of optical ring modulators 805-1, 805-2, 805-3, 805-4 will be hereafter referred to, collectively, as optical ring modulators 805 and, generically, as an optical ring modulator 805; and plurality of second optical taps 811-1, 811-2, 811-3, 811-4 will be hereafter referred to, collectively, as second optical taps 811 and, generically, as a second optical tap 811.

Like optical ring modulators 705, optical ring modulators 805 are each tuned to modulate a different optical frequency being conveyed by optical input bus 803. Hence, optical input bus 803 carries all of optical frequencies, and optical output bus 807 carries all modulated optical frequencies. As such, each of second optical taps 811 is located to sample a respective modulated optical signal being modulated by a respective optical ring modulators 805, and hence a location of each of second optical taps 811 is similar to second optical tap 411 of device 401. Hence, when method 300 is implemented at controller 820, output from each of second optical taps 811 can be used to determine insertion loss using Equation (2).

The configuration of device 801 can hence be referred to as a single-bus-multiple-ring configuration as the modulation for each optical frequency occurs on a same optical bus.

However, in contrast to the multiple-bus-multiple-ring configuration of device 701, in device 801 there is a common first optical tap 809 on optical input bus 803, first optical tap 809 being tunable to the various frequencies being modulated by each optical ring modulator 805

Specifically, first optical tap 809 is generally located prior to a first optical ring modulator 805-1 on optical input bus 803. First optical tap 809 comprises: a photodiode 860; and a tunable optical ring filter 865 located between optical input bus 803 and photodiode 860, tunable optical ring filter 865 configured to: sequentially tune a present filter frequency through a range of frequencies to sequentially produce signals at photodiode 860 indicative of a strength of optical signals on optical input bus 803 corresponding to the present filter frequency.

While not depicted, controller 820 is further in communication with photodiode 860 and tunable optical ring filter 865, controller 820 further configured to: control tunable optical ring filter 865 to sequentially tune the present filter frequency through the range of frequencies; and receive the signals from photodiode 860, a signal corresponding to the given optical frequency used to determine the current insertion loss of an optical ring modulator 805, for example as input to Equation (2), along with respective output from a respective second optical tap 811. For example, as described above, a resonance frequency of an optical ring filter can be tuned by controlling an associated heater and/or an associated voltage control device. While not depicted, it is assumed that tunable optical ring filter 865 comprises a respective heater and/or a respective voltage control device similar to other ring filters and/or modulators described herein, and that controller 820 is in communication with at least the respective heater. Controller 820 can hence control the respective heater through a range that causes tunable optical ring filter 865 to resonate with each of the given optical signals on optical input bus 803.

Thus method 300 can be implemented at controller 820 for each optical ring modulator 805 using signals from first optical tap 809 when tuned to a respective optical frequency being modulated, and signals from a respective second optical tap 811.

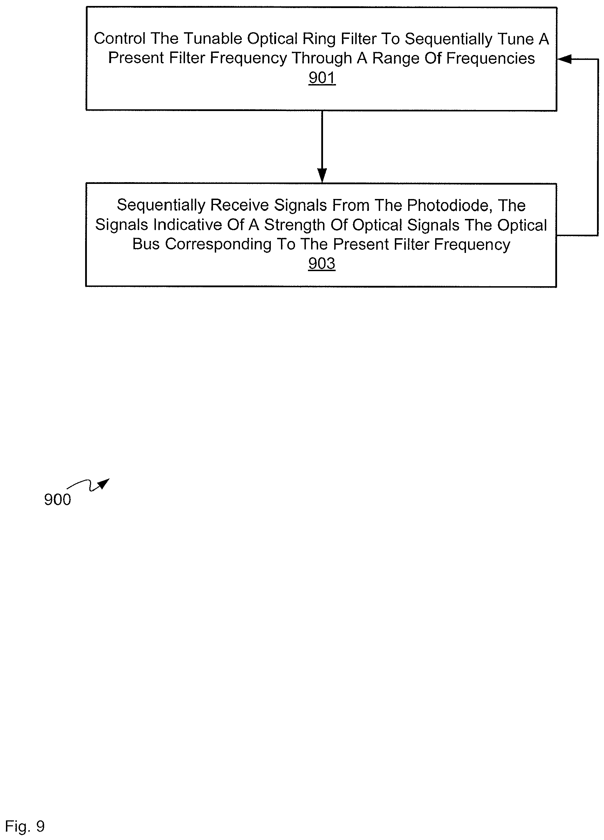

For example, attention is now directed to Fig. 9 which depicts a flowchart of a method 900 for controlling a ring resonator based optical scanning analyzer, according to non-limiting implementations. In order to assist in the explanation of method 900, it will be assumed that method 900 is performed using device 801, and specifically by controller 820, for example when controller 820 is implementing an application stored at device 801, similar to application 126 but adapted for optical tap control. Indeed, method 900 is one way in which device 801 and/or controller 820 can be configured. Furthermore, the following discussion of method 900 will lead to a further understanding of device 801 and its various components and/or controller 820. However, it is to be understood that device 801 and/or controller 820 and/or method 900 can be varied, and need not work exactly as discussed herein in conjunction with each other, and that such variations are within the scope of present implementations.

Regardless, it is to be emphasized, that method 900 need not be performed in the exact sequence as shown, unless otherwise indicated; and likewise various blocks may be performed in parallel rather than in sequence; hence the elements of method 900 are referred to herein as "blocks" rather than "steps". It is also to be understood, however, that method 900 can be implemented on variations of system 900 as well.

It is furthermore assumed in method 900 that device 801 comprises: an optical bus 803 configured to convey optical signals; an optical tap 809 on optical bus 803 configured to sample the optical signals, optical tap 809 comprising: a photodiode 860; and, a tunable optical ring filter 865 located between optical input bus 803 and photodiode 860; and, a controller 820 in communication with tunable optical ring filter 865, and photodiode 860, controller 820 configured to implement method 900 described hereafter.

At block 901, controller 820 controls tunable optical ring filter 865 to sequentially tune a present filter frequency through a range of frequencies, for example by controlling a heater thereof, though a voltage control device thereof can also be controlled.

At block 903, controller 820 sequentially receive signals from photodiode 860, the signals indicative of a strength of optical signals on optical bus 803 corresponding to the present filter frequency. Method 900 can then repeat.

Whenever controller 820 receives signals from photodiode 860 corresponding to a strength of an optical signal being tuned by one of optical ring modulators 805, controller 820 can implement method 300 for that optical ring modulator 805 using the signal from 860 as an input for power Pi of Equation (2).

Hence, device 801 can further store a table correlating heater power to resonance frequency of tunable optical ring filter 865 and method 300 can be implemented for a given optical ring modulator 805 when the heater power corresponds to a respective resonance frequency of tunable optical ring filter 865.

In device 801, each optical ring modulator 805 and corresponding second optical tap 811 form an alignment apparatus configured to maintain the given insertion loss for a given optical frequency using a feedback loop that includes first optical tap 809, the device further comprising a plurality of alignment apparatuses arranged in series on optical input bus 803, each of the plurality of alignment apparatuses configured to maintain a respective given insertion loss for a respective given optical frequency using respective feedback loops, respective optical ring modulators 805 for each of the each of the plurality of alignment apparatuses arranged in series on optical input bus 803, the plurality of alignment apparatuses having first optical tap 809 in common such that a respective current insertion loss is determined from a respective signal corresponding to a given respective optical frequency received as tunable optical ring filter 865 scans through the range of frequencies.

As first optical tap 809 is tunable, and can scan through a range of optical frequencies, first optical tap 809 can also be referred to as an optical scanning analyzer (OSA) that can be integrated into a PIC structure. While such a PIC-based optical scanning analyzer is described with reference to device 801 that includes a plurality of ring modulators 805 and a plurality of associated optical taps 811, such a PIC-based optical scanning analyzer can be integrated into other devices, including PIC-based devices, where determination of a strength of a plurality of optical signals on an optical bus is to occur. Hence, first optical tap 809, including photodiode 860 and tunable optical ring filter 865 (which can also be provided with a controller implementing method 900) can be provided independent of device 801 and/or integrated into other types of devices.

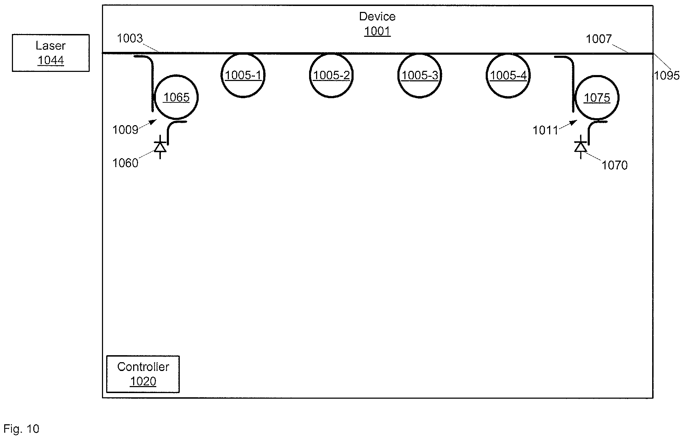

Such optical scanning analyzers can also be used to determine a strength of a modulated optical signal. For example, attention is next directed to Fig. 10 which depicts a device 1001 that is similar to device 801, with like elements having like number however in an "1000" series rather than a "800" series. Device 1001 comprises a common input bus 1003 which receives optical signals from a laser 1044, and conveys optical signals to a plurality of optical ring modulators 1005-1, 1005-2, 1005-3, 1005-4, and a common output bus 1007 which outputs multiplexed modulated optical signals at an output 1095. Device 1001 further comprises a first optical tap 1009 on optical input bus 1003, and a second optical tap 1011 on optical output bus 1007. Device 1001 further comprises a controller 1020 in communication with respective heaters and respective voltage control devices of each of plurality of optical ring modulators 1005-1, 1005-2, 1005-3, 1005-4, as well as each of first optical tap 1009 and second optical tap 1011, though electrical links there between are omitted for clarity, similar to Fig. 8.

Hence, while not depicted for clarity, it is further assumed that each of plurality of optical ring modulators 1005-1, 1005-2, 1005-3, 1005-4 comprises a respective heater and voltage control device. Furthermore, while not depicted, it is assumed that device 1001 further comprises a memory storing an application, similar to memory 522 and application 526, and an interface similar to interface 524.

Furthermore, plurality of optical ring modulators 1005-1, 1005-2, 1005-3, 1005-4 will be hereafter referred to, collectively, as optical ring modulators 1005 and, generically, as an optical ring modulator 1005.

As in device 801, first optical tap 1009 comprises a photodiode 1060 and a tunable optical ring filter 1065. However, in contrast to device 801, device 1001 comprises a common second optical tap 1011 on optical output bus 1007, located between a last optical ring modulator 1005-4 and output 1095, second optical tap 1011 similar to first optical tap 1009 and comprising : a photodiode 1070; and a tunable optical ring filter 1075 located between optical output bus 1007 and photodiode 1070, tunable optical ring filter 1075 configured to: sequentially tune a present filter frequency through a range of frequencies to sequentially produce signals at photodiode 1070 indicative of a strength of modulated optical signals on optical input bus 1003 corresponding to the present filter frequency. It is hence further assumed that controller 1020 is in communication with photodiode 1070 and tunable optical ring filter 1075.

In other words, controller 1020 can control second optical tap 1011 in a manner similar to first optical tap 1009 and hence method 900 can be implemented at controller 1020 to determine strength of signals from both first optical tap 1009 and second optical tap 1011.

It is yet further appreciated that the OSA structures described with reference to Figs. 8, 9 and 10, and the VOA structures described with reference to Figs. 5 and 6 can be implemented, for example in PIC structures, independently of the optical ring resonator and/or modulator structures that are controlled according to method 300. For example, the OSA structures in either of Figs. 8 and 10 can be used at any optical circuit and/or PIC where sampling of multiplexed optical signals on a common waveguide and/or optical bus is to occur.

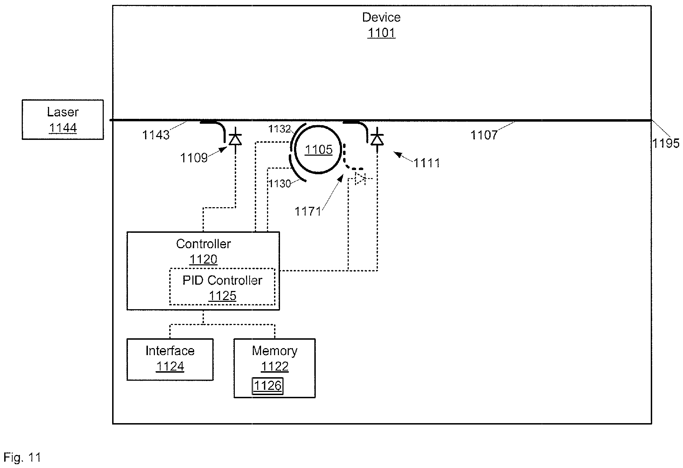

Similarly, a VOA structure can be implemented at any optical circuit and/or PIC where control of an optical signal is to occur. For example, attention is next directed to Fig. 11, which depicts a device 1101 comprising: an optical bus 1143 configured to convey optical signals (for example from a laser 1144); an optical ring filter 1105 in communication with the optical bus 1143, optical ring filter 1105 configured to tune the optical signals on optical bus 1143; an optical output bus 1107 configured to convey tuned optical signals from optical ring filter 1105; an optional first optical tap 1109 configured to sample the optical signals on optical bus 1143; a second optical tap 1111 configured to sample the tuned optical signals; and, a controller 1120 in communication with at least second optical tap 1111, and alternatively also first optical tap 1109, controller 1120 configured to tune optical ring filter 1105 to control a strength of the tuned optical signals in a feedback loop with output from at least second optical tap 1111. For example, controller 1120 can control optical ring filter 1105 in a feedback loop with sampling of the tuned optical signals from second optical tap 1111 so that a target output is reached on second optical tap 1111. As depicted, device 1101 further comprises a memory 1122 and an interface 1124 interconnected with controller 1120, memory 1122 storing an application 1126. In general, controller 1120 implements method 600 to tune optical ring filter 1105 such that a strength of the tuned optical signals is controlled to target strength. When method 600 is implemented at controller 1120, at block 601 controller 1120 determined strength of a current output from one or more of optical taps 1111, 1171, at block 603 controller 1120 compares the current output with a target output (and/or a respective target output), for example stored in memory 1120 and/or in conjunction with application 1126 and/or using other techniques described above with reference to method 600. At block 605 controller 1120 controls optical ring filter 605 to change the output from one or more of optical taps 1111, 1171 towards the target output (and/or the respective target output). An optional PID controller 1125 is also shown, and method 600 can be implemented therewith, as well as a heater 1130 and a voltage control device 1132. Furthermore, while second optical tap 1111 is depicted as being located to sample the tuned optical signals on optical output bus 1107, a position of an alternative second optical tap 1171 is depicted, in stippled lines, as sampling the tuned optical signals at optical ring filter 1105, similar to optical tap 411. It is appreciated that only one of second optical taps 1111, 1171 is present in order to implement method 600, though both of second optical taps 1111, 1171 can be present. Hence, in general, device 1101 comprises a variable optical attenuator and optical signals input into device 1101 can be variably tuned.

It is further appreciated that device 1120 can be modified to add an optical ring modulator similar to optical ring modulator 505 as well as any additional optical busses such that device 1120 is similar to device 501. In other words, an optical ring modulator structure can be added after optical ring filter 1105, and optical taps can be moved and/or added that monitor tuned optical signals including, but not limited to, modulated tuned optical signals, similar to device 501. Hence, for example, device 1120 can further comprise: a second optical output bus (e.g. similar to optical bus 503) and an optical ring modulator (e.g. similar to optical ring modulator 505), optical output bus 1143 configured to convey the tuned optical signals from optical ring filter 1105 to the optical ring modulator, the second optical output bus configured to convey modulated optical signals from the optical ring modulator, the optical ring modulator configured to modulate the tuned optical signals to produce the modulated optical signals, the one or more optical taps configured to sample the tuned optical signal at one or more of the optical output bus 1107 (e.g. as depicted in Fig. 11), the second optical output bus, and the optical ring modulator (e.g. similar to the locations of optical tap 511 in Fig. 5 and optical tap 411 in Fig. 4).

Hence, provided herein are devices in which insertion loss is used to tune resonance of optical ring modulators in a feedback loop. A second feedback loop can be implemented in multiple-bus-multiple-ring configuration to control input power and/or output power of each optical ring modulator, independent of control of the insertion loss on each optical ring modulator. In single-bus-multiple-ring configurations, one or more optical scanning analyzers can be integrated into the devices to sequentially measure strength of input and/or output of each optical ring modulator on a common optical bus, which can then be used to control respective insertion loss in each in respective feedback loops.

Those skilled in the art will appreciate that in some implementations, the functionality of devices 101, 401, 501, 701, 801, 1001, 1101 can be implemented using pre-programmed hardware or firmware elements (e.g., application specific integrated circuits (ASICs), electrically erasable programmable read-only memories (EEPROMs), etc.), or other related components. In other implementations, the functionality of computing devices 101, 401, 501, 701, 801, 1001, 1101 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Furthermore, it is appreciated that the computer-readable program can be stored as a computer program product comprising a computer usable medium. Further, a persistent storage device can comprise the computer readable program code. It is yet further appreciated that the computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., radio-frequency (RF), microwave, infrared, free-space optical or other transmission schemes) or a combination thereof.

Persons skilled in the art will appreciate that there are yet more alternative implementations and modifications possible, and that the above examples are only illustrations of one or more implementations. The scope, therefore, is only to be limited by the claims appended hereto.

## Claims

1. A device comprising:

   an optical input bus configured to convey a given optical input signal having a given optical frequency;
   an optical ring modulator configured to: receive the given optical input signal from the optical input bus; and modulate the given optical input signal;
   an optical output bus configured to convey a modulated optical signal from the optical ring modulator;
   a first optical tap on the optical input bus configured to sample the given optical input signal input to the optical ring modulator;
   a second optical tap configured to sample the modulated optical signal; and,
   a controller in communication with the optical ring modulator, the first optical tap and the second optical tap, the controller configured to:

      determine a current insertion loss of the optical ring modulator from respective signals received from both the first optical tap and the second optical tap; and, control the optical ring modulator in a feedback loop with the current insertion loss until the current insertion loss comprises a given insertion loss.

2. The device of claim 1, wherein the optical ring modulator comprises a heater, and the controller is configured to control the heater when controlling the optical ring modulator in the feedback loop.

3. The device of claim 1, wherein the second optical tap is in communication with the optical ring modulator such that the modulated optical signal is sampled at the optical ring modulator, and the controller is configured to determine the insertion loss by determining a reciprocal insertion loss by: dividing a sampled signal from the first optical tap by a respective sampled signal from the second optical tap.

4. The device of claim 1, wherein the second optical tap is in communication with the optical output bus such that the modulated optical signal is sampled at the optical output bus, and the controller is configured to determine the insertion loss by dividing a sampled signal from the second optical tap by a respective sampled signal from the first optical tap.

5. The device of claim 1, further comprising an optical ring filter located on the optical input bus, the optical ring filter configured to selectively convey the given optical input signal having the given optical frequency to the optical ring modulator, while preventing other optical input signals from reaching the optical ring modulator and the first optical tap.

6. The device of claim 5, wherein the controller is further configured to tune the optical ring filter to control a strength of one or more of the given optical input signal and the modulated optical signal in a feedback loop with output from one or more of the first optical tap and the second optical tap.

7. The device of claim 5, wherein the optical ring filter, the optical ring modulator, optical input bus, the optical output bus, the first optical tap and the second optical tap form an alignment apparatus configured to maintain the given insertion loss for the given optical frequency using the feedback loop, the device further comprising a plurality of alignment apparatuses, including the alignment apparatus, arranged in series on the optical input bus, each of the plurality of alignment apparatuses configured to maintain a respective given insertion loss for a respective given optical frequency using respective feedback loops, a respective ring filter for each of the plurality of alignment apparatuses configured to convey a respective given optical input signal to a respective optical ring modulator, while preventing the other optical input signals on the optical input bus from reaching a respective optical ring modulator and a respective first optical tap.

8. The device of claim 1, wherein the first optical tap comprises: a photodiode; and a tunable optical ring filter located between the optical input bus and the photodiode, the tunable optical ring filter configured to: sequentially tune a present filter frequency through a range of frequencies to sequentially produce signals at the photodiode indicative of a strength of optical signals on the optical input bus corresponding to the present filter frequency.

9. The device of claim 8, wherein the controller is further in communication with the photodiode and the tunable optical ring filter, the controller further configured to: control the tunable optical ring filter to sequentially tune the present filter frequency through the range of frequencies; and receive the signals from the photodiode, a signal corresponding to the given optical frequency used to determine the current insertion loss of the optical ring modulator.

10. The device of claim 8, wherein the optical ring filter, the optical ring modulator, the optical output bus, the first optical tap and the second optical tap form an alignment apparatus configured to maintain the given insertion loss for the given optical frequency using the feedback loop, the device further comprising a plurality of alignment apparatuses, including the alignment apparatus, arranged in series on the optical input bus, each of the plurality of alignment apparatuses configured to maintain a respective given insertion loss for a respective given optical frequency using respective feedback loops, respective optical ring modulators for each of the each of the plurality of alignment apparatuses arranged in series on the optical input bus, the plurality of alignment apparatuses having the first optical tap in common such that a respective current insertion loss is determined from a respective signal corresponding to a given respective optical frequency received as the tunable optical ring filter scans through the range of frequencies.

11. The device of claim 1, wherein the second optical tap comprises: a photodiode; and a tunable optical ring filter located between the optical output bus and the photodiode, the tunable optical ring filter configured to: sequentially tune a present filter frequency through a range of frequencies to sequentially produce signals at the photodiode indicative of a strength of modulated optical signals on the optical input bus corresponding to the present filter frequency.

12. The device of claim 1, wherein the optical ring modulator comprises a voltage control device and the controller is further configured to control the voltage control device to modulate the given optical input signal.

13. A device comprising:

an optical bus configured to convey optical signals;
an optical tap on the optical bus configured to sample the optical signals, the optical tap comprising:

a photodiode; and,
a tunable optical ring filter located between the optical bus and the photodiode; and,

a controller in communication with the tunable optical ring filter, and the photodiode, the controller configured to:

control the tunable optical ring filter to sequentially tune a present filter frequency through a range of frequencies; and, sequentially receive signals from the photodiode, the signals indicative of a strength of optical signals the optical bus corresponding to the present filter frequency.

14. A device comprising:

an optical bus configured to convey optical signals;
at least one optical ring filter in communication with the optical bus the at least one optical ring filter configured to tune the optical signals on the optical bus;
an optical output bus configured to convey tuned optical signals from the at least one optical ring filter;
one or more optical taps configured to sample the tuned optical signals; and,
a controller in communication with the one or more optical taps, the controller configured to tune the optical ring filter to control a strength of the tuned optical signals in a feedback loop with output from the one or more optical taps.

15. The device of claim 14, further comprising: a second optical output bus and an optical ring modulator, the optical output bus configured to convey the tuned optical signals from the optical ring filter to the optical ring modulator, the second optical output bus configured to convey modulated optical signals from the optical ring modulator, the optical ring modulator configured to modulate the tuned optical signals to produce the modulated optical signals, the one or more optical taps configured to sample the tuned optical signal at one or more of the optical output bus, the second optical output bus, and the optical ring modulator.

Fig. 1

Fig. 2

Determine A Current Insertion Loss Of The Optical Ring
Resonator From Respective Signals Received From Both The
First Optical Tap And The Second Optical Tap
301

Current Insertion Loss =
Given Insertion Loss?
303

Yes

No

Control The Optical Ring Resonator To Change Insertion Loss
305

300

Fig. 3

Fig. 4

Fig. 5

Determine Strength Of A Current Output Received From One
Or More Of The First Optical Tap And The Second Optical Tap
601

Current Output = Target
Output ?
603

Yes

No

Control The Optical Ring Filter To Change Output
605

600

Fig. 6

Fig. 7

Fig. 8

Control The Tunable Optical Ring Filter To Sequentially Tune A
Present Filter Frequency Through A Range Of Frequencies
901

Sequentially Receive Signals From The Photodiode, The
Signals Indicative Of A Strength Of Optical Signals The Optical
Bus Corresponding To The Present Filter Frequency
903

900

Fig. 9

Fig. 10

Fig. 11

Europäisches Patentamt

European Patent Office

Office européen des brevets

# EUROPEAN SEARCH REPORT

Application Number

EP 16 19 8357

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/277053 A1 (ZHENG XUEZHE [US] ET AL) 1 October 2015 (2015-10-01) | 1-4 | INV. G02F1/313 |
| Y | * paragraph [0008]; figure 1 * | 5-10,12 | H04J14/02 |
| X | US 2015/104176 A1 (BAEHR-JONES THOMAS [US] ET AL) 16 April 2015 (2015-04-16) | 1-4 | |
| Y | * paragraph [0033] - paragraph [0035] * | 5,7-10, 12 | |
| A | | 6 | |
| X | DYLAN F LOGAN ET AL: "Monitoring and Tuning Micro-Ring Properties Using Defect-Enhanced Silicon Photodiodes at 1550 nm", IEEE PHOTONICS TECHNOLOGY LETTERS, IEEE SERVICE CENTER, PISCATAWAY, NJ, US, vol. 24, no. 4, 1 February 2012 (2012-02-01), pages 261-263, XP011398615, ISSN: 1041-1135, DOI: 10.1109/LPT.2011.2177453 * Chapter III.A Power Monitor of Racetrack Resonator; figure 1 * | 1 | |
| X | US 2006/083144 A1 (PIEDE DAVID [US] ET AL) 20 April 2006 (2006-04-20) * paragraph [0027] - paragraph [0029]; figure 4 * * paragraph [0038]; figure 7 * | 1 | TECHNICAL FIELDS SEARCHED (IPC) G02F H04J |
| Y | US 2012/237155 A1 (ZHENG XUEZHE [US] ET AL) 20 September 2012 (2012-09-20) * figure 1A * | 5,7 | |

-/--

The present search report has been drawn up for all claims

| Place of search | Date of completion of the search | Examiner |
|---|---|---|
| The Hague | 30 May 2017 | Diot, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 16 19 8357

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2011/310917 A1 (KRISHNAMOORTHY ASHOK V [US] ET AL) 22 December 2011 (2011-12-22) <br> * paragraph [0037] - paragraph [0039]; figure 3 * <br> * paragraph [0043] * | 5 | |
| Y | US 2012/301068 A1 (MEADE ROY [US] ET AL) 29 November 2012 (2012-11-29) <br> * paragraph [0018] - paragraph [0023]; figure 2 * | 6 | |
| | | | TECHNICAL FIELDS SEARCHED (IPC) |

The present search report has been drawn up for all claims

| Place of search | Date of completion of the search | Examiner |
|---|---|---|
| The Hague | 30 May 2017 | Diot, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 19 8357

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2017

| Patent document cited in search report | | Publication date | Patent family member(s) | | Publication date |
|---|---|---|---|---|---|
| US 2015277053 | A1 | 01-10-2015 | NONE | | |
| US 2015104176 | A1 | 16-04-2015 | CA | 2927537 A1 | 23-04-2015 |
| | | | CN | 105765798 A | 13-07-2016 |
| | | | EP | 3058627 A1 | 24-08-2016 |
| | | | JP | 2016535862 A | 17-11-2016 |
| | | | US | 2015104176 A1 | 16-04-2015 |
| | | | US | 2016329983 A1 | 10-11-2016 |
| | | | WO | 2015057795 A1 | 23-04-2015 |
| US 2006083144 | A1 | 20-04-2006 | CA | 2584564 A1 | 27-04-2006 |
| | | | CN | 101283300 A | 08-10-2008 |
| | | | EP | 1810285 A2 | 25-07-2007 |
| | | | JP | 2008517332 A | 22-05-2008 |
| | | | KR | 20070088637 A | 29-08-2007 |
| | | | US | 2006083144 A1 | 20-04-2006 |
| | | | WO | 2006044887 A2 | 27-04-2006 |
| US 2012237155 | A1 | 20-09-2012 | NONE | | |
| US 2011310917 | A1 | 22-12-2011 | US | 2011310917 A1 | 22-12-2011 |
| | | | US | 2016072255 A1 | 10-03-2016 |
| US 2012301068 | A1 | 29-11-2012 | CN | 103733099 A | 16-04-2014 |
| | | | EP | 2715421 A1 | 09-04-2014 |
| | | | JP | 5793615 B2 | 14-10-2015 |
| | | | JP | 2014519623 A | 14-08-2014 |
| | | | KR | 20140016988 A | 10-02-2014 |
| | | | TW | 201305632 A | 01-02-2013 |
| | | | US | 2012301068 A1 | 29-11-2012 |
| | | | US | 2014126854 A1 | 08-05-2014 |
| | | | US | 2015063826 A1 | 05-03-2015 |
| | | | WO | 2012166349 A1 | 06-12-2012 |

EPO FORM P0459

For more details about this annex : see Official Journal of the European Patent Office, No. 12/82